# EUROPÄISCHE PATENTSCHRIFT

(11) **EP 3 791 105 B1**
(45) Veröffentlichungstag und Bekanntmachung des Hinweises auf die Patenterteilung: **31.08.2022**
(21) Anmeldenummer: 19724730.7
(22) Anmeldetag: 03.05.2019
(51) Int. Cl.: F16P 3/14, B25J 9/00, G01D 5/24, F16P 3/12

(54) **VORRICHTUNG UND VERFAHREN ZUR SICHERUNG EINES MASCHINELL ODER AUTOMATISCH GESTEUERTEN BEWEGLICHEN GERÄTES UND SENSORKACHEL**
DEVICE AND METHOD FOR PROTECTING A MOBILE APPLIANCE UNDER MACHINE OR AUTOMATIC CONTROL, AND SENSOR TILE
DISPOSITIF ET PROCÉDÉ POUR SÉCURISER UN APPAREIL MOBILE À COMMANDE MÉCANIQUE OU AUTOMATIQUE ET CARREAU DE CAPTEURS

(30) Priorität: 07.05.2018 DE 102018110852
(43) Veröffentlichungstag der Anmeldung: 17.03.2021
(73) Patentinhaber: Kinotex Sensor GmbH, 54298 Igel (DE); BASF SE, 67056 Ludwigshafen am Rhein (DE)
(72) Erfinder: BINDGES, Winfried, 54298 Igel (DE); KAMPMANN, Peter, 28199 Bremen (DE)
(74) Vertreter: Hagebölling, Johannes
(86) Internationale Anmeldenummer: PCT/DE2019/100394
(87) Internationale Veröffentlichungsnummer: WO 2019/214769

(56) Entgegenhaltungen:
- EP-A1- 1 810 795
- US-A- 5 373 245

## Beschreibung

Die Erfindung betrifft eine Vorrichtung sowie Verfahren zur Sicherung eines maschinell oder automatisch gesteuerten beweglichen Gerätes, insbesondere eines Handhabungsgerätes wie eines Roboters oder eines AGV. Daneben betrifft die Erfindung eine für die Vorrichtung geeignete bzw. diese aufweisende Sensorkachel, ein Sensornetz mit solchen Kacheln und das mit Kacheln oder Sensornetz versehene Gerät. Durch die Auslegung der Vorrichtung wird gewährleistet, dass sie und die damit durchgeführten Verfahren hohen Sicherheitsanforderungen an eine Mensch-Maschine-Kollaboration entspricht.

### Stand der Technik

Aus DE 10 2004 041 821 A1 ist ein berührungsloses Sicherheitssystem unter Verwendung von Ultraschall- oder Mikrowellensensoren zur Sicherung eines maschinell gesteuerten Handhabungsgerätes bekannt. Die eingesetzten Näherungssensoren können dabei Ultraschall-oder Mikrowellensensoren umfassen. Neben berührungslosen Näherungssensoren können auch weitere Sicherheitsvorkehrungen wie Kontaktmatten vorgesehen sein. Weiter ist beschrieben, dass eine Kombination der Ultraschall- oder Mikrowellensensoren für die Überwachung einer Zone mit einem weiteren Sensor erfolgen kann, der dieselbe Zone überwacht, aber auf Basis eines unterschiedlichen physikalischen Prinzips arbeitet, z. B. ein Passivinfrarotsenor oder ein Ultraschallsensor.

Aus US 5,375,245 ist eine Sicherheitssensorik bekannt, die als Annäherungssensorik ausgebildet ist. Dazu ist eine sogenannte "Capaciflector"-Kamera vorgesehen, die mehrere kapazitative, zu einem Sensorfeld zusammengeschaltete Annäherungssensoren aufweist. Die kapazitativ bereitgestellten Sensorsignale werden elektronisch zu einem Bild zusammengesetzt. Die Sicherheitssensorik kann bei Roboteranwendungen im Weltall verwendet werden. Ein weiteres berührungsloses Sicherheitssystem zur Sicherung eines maschinell gesteuerten Handhabungsgerätes ist aus DE 10 2013 021 387 A1 bekannt. Das System arbeitet auf Basis einer kapazitiven Sensorik.

Diese aus dem Stand der Technik bekannten Sicherheitssysteme sind nicht zweikanalig konfigurierbar und verfügen nicht über die Fähigkeit einer permanenten Überwachung der eigenen Funktionsparameter. Diese Systeme bisher auch nur an kleinen Servicerobotern bis maximal 10 kg Handlinggewicht appliziert.

AGV ("Automated Guided Vehicles") bzw. automatisch gesteuerte Fahrzeuge sind bekannt. Ihre Funktionsweise und ihr Betrieb wird im Internet in dem dort derzeit abrufbaren Film https://www.youtube.com/watch?v=qkmeAoWu3ug erläutert. Ein weiterer Film, der den Betrieb von AGVs erläutert, ist unter https://www.youtube.com/watch?v=yxqTtN--IAU derzeit im Internet zu finden.

AGVs können beispielsweise in der Krankenhauslogistik zum Einsatz kommen, wie das in dem im Internet abrufbaren Film https://www.youtube.com/watch?v=TdkTzohsgFU gezeigt ist.

Für eine sichere "Mensch-Roboter-Kollaboration" mit Industrierobotern, die mit einem Handlings-gewicht von bis zu 300 kg und Verfahrgeschwindigkeiten von ≥ 2500mm/Sekunde operieren, ist nach Robotersicherheitsnorm ISO 10218 ein Safety Integrity Level (SIL) von 2 sowie ein Performance Level (PL) von d gefordert. Voraussetzung ist auch ein 2-kanalig ausgelegtes System. Dies ist mit den bisher bekannten Systemen nicht erreichbar. Analoge Anforderungen werden auch an eine "Mensch-Maschine-Kollaboration" mit anderen Geräten oder AGVs gestellt. Der Safety Integrity Level wird dabei auf einer Skala von 1 bis 4 (1 niedrigster und 4 höchster) und der Performance Level auf einer Skala von a bis e (a niedrigster und e höchster) angegeben. Die erfindungsgemäße Vorrichtung soll mindestens SIL 2 und PL d erfüllen, aber auch für Anwendungen mit geringeren Anforderungen einsetzbar sein.

Fahrerlose Transportfahrzeuge ("FTF") sind in erster Linie innerbetriebliche, flurgebundene Fördersysteme mit automatisch gesteuerten Fahrzeugen, deren primäre Aufgabe der Materialtransport ist. Sie werden innerhalb und außerhalb von Gebäuden eingesetzt. FTF kommen mittlerweile in vielfältigen Konfigurationen zum Einsatz, für den Transport von Essen in einem Krankenhaus bis zum Transport von großvolumigen Tankcontainern mittels Schwerlast-FTF in Chemieunternehmen. Die Abmessungen dieser FTF können bis zu 16,00 m in der Länge und 3,00 m in der Breite betragen.

Für Personenschutzsysteme an FTF sind derzeit noch keine gesonderten Normen etabliert. Bis zum Erscheinen der EN ISO 3691-4 müssen sich die Hersteller und Betreiber an der bestehenden Maschinenrichtlinie sowie der EN 1525 orientieren.

Die Fahrbahnsteuerung und Überwachung von Schwerlast-FTF erfolgt derzeit durch optische Verfahren, induktive Verfahren, Magnetmarken, GPS oder Transponder sowie durch Überwachung mittels Videokameras von einer Leitstelle. Einen Rundumschutz für Personen bei FTF gibt es derzeit nicht. Bei einigen Ausführungsformen wird der Fahrweg mittels eines horizontal ausgerichteten Laserscanners vorausschauend auf Hindernisse abgetastet und mittels eines Bodenscanners wird die Fahrbahn vor dem FTF abgetastet. Hierzu ist der Bodenscanner in einem Neigungswinkel von ca. 30° zur Fahrbahn montiert. Bei einer Abweichung durch ein Objekt im Scanbereich wird ein Not-Stopp ausgelöst. Unebenheiten in der Fahrbahn wie Bodenwellen oder Schlaglöcher werden von dem Bodenscanner allerdings auch als "Unregelmäßigkeit" detektiert und können zum Not-Stopp führen. Je nach Neigungswinkel des Sensors ergibt sich ein Erfassungsbereich von ca. 4 m bei einer max. Fahrgeschwindigkeit von ca. 10 km/h. Für eine seitliche Absicherung eines Schwerlast-FTF sind die oben beschriebenen Laserscanner aufgrund der kurzen seitlichen Erkennungsdistanz, ihres möglichen Scanbereichs sowie der Latenzzeit für einen Scanzyklus nicht geeignet.

Aus Untersuchungen zur Absicherung von Gabelstaplern sind verschiedene Systemansätze für Personenschutzsysteme bekannt. Potentielle Personenschutzsysteme wie Ultraschallsysteme, RFID Transponder, RADAR-Sensoren, Bild-/Videokameras und 3D- und Stereokamerasysteme, die für eine heckseitige Absicherung von Gabelstaplern untersucht wurden, eignen sich jedoch weder als Assistenz- noch als Sicherheitssystem für die Rundum-Absicherung eines Schwerlast-FTF.

In Logistikbereichen, in denen sich systembedingt Fußgänger und Flurförderzeuge gleichzeitig bewegen und aufhalten dürfen, ist ein Personenschutz für rückwärts fahrende Flurförderfahrzeuge in der Regel nur mit Sensoren am Flurförderzeug möglich. Warnanlagen und Geschwindigkeitsbegrenzungen sind in diesem Fall nicht geeignet. Personenschutz insbesondere vor rückwärtsfahrenden Flurförderfahrzeugen kann nur durch technische Maßnahmen mittels Sensoren umsetzen. Kommen Fußgänger in den Gefahrenbereich, so muss das Flurförderfahrzeug unabhängig vom Fahrer/in auch bei maximaler Geschwindigkeit automatisch bis zum Stillstand abgebremst werden, d. h. das Fahrzeug muss stillstehen, bevor feste Teile Personen berühren. Ein Wiederanfahren in die Richtung, in der eine Person erkannt wurde, muss verhindert sein, solange diese sich noch im Gefahrenbereich befindet.

Personenschutzeinrichtungen für Logistikbereiche, in denen sich Fußgänger und Flurförderfahrzeuge gleichzeitig aufhalten dürfen, müssen mindestens Performance Level c nach DIN EN ISO 13849-1 "Sicherheit von Maschinen; Sicherheitsbezogene Teile von Steuerungen, Teil 1: Allgemeine Gestaltungsleitlinien" entsprechen. Personenschutzsysteme die diese Anforderung erfüllen sind derzeit noch nicht verfügbar.

Als mögliche Personenschutzsysteme für Flurförderfahrzeuge (Gabelstapler) wurden bisher die nachfolgend beschriebenen Systeme untersucht:
a) Ultraschallsysteme:
   Ultraschallgeräte senden Schallsignale aus, die von Objekten und Hindernissen reflektiert werden. Die Schallwellen breiten sich kegelförmig aus, wobei die Ausbreitung und die Reflektion der Schallwellen abhängig sind vom Luftdruck, der Umgebungstemperatur, der Luftfeuchtigkeit sowie vom Sende-/Empfangswinkel und der Oberfläche des im Schallkegel befindlichen Objekts. Der Erfassungsbereich von Ultraschallsensoren kann bis zu 10 m betragen. Zur Hinderniserkennung werden Ultraschallsensoren im Automobilbereich als Rückfahrwarnsysteme oder Einparkhilfen eingesetzt. Ultraschallsysteme können ein Hindernis/Objekt aber nicht genau orten, sondern nur erkennen, dass es sich innerhalb des Schallkegels befindet. Befinden sich mehrere Objekte in einem Schallkegel, so wird nur der Abstand zum nächstliegenden gemessen; die weiter entfernt liegenden werden ignoriert. Für die Wahrnehmung eines Hindernisses sind Form und Struktur ebenfalls von Bedeutung. In ungünstigen Konstellationen kann es vorkommen, dass der Sensor sein Umfeld nicht korrekt wahrnimmt. Probleme ergeben sich auch aus den Reflexionseigenschaften der Oberfläche von Objekten. Schallschluckende Kleidung von Personen kann Probleme bereiten. Andererseits ergeben sich Fehlmessungen durch Mehrfachreflektionen von harten Oberflächen. Für eine Verwendung an Gabelstaplern in einem eng begrenzten Lagerbereich sind sie daher nicht geeignet. Eine Eigenüberwachung ihrer Funktionstüchtigkeit ist Prinzip bedingt ebenfalls nicht möglich. Ultraschallsysteme können daher nicht als Sicherheitssysteme, sondern allenfalls als Assistenzsysteme eingesetzt werden.
b) RFID Transponder für den Nahbereich:
   Für ein Personenerkennungssystem mittels Transponder wird eine Sende-/Empfangseinheit auf einem Gabelstapler installiert. Diese sendet ein Funksignal, welches von einem Transponder empfangen und reflektiert wird. Personen, die sich im Gefahrenbereich aufhalten könnten, müssen einen sogenannten Personentransponder tragen. In der Regel wird dieser in eine Warnweste integriert. Auf Basis einer Laufzeitmessung soll das System erkennen, ob und in welcher Entfernung sich Stapler und Person zueinander befinden. Bei Unterschreitung einer definierten Distanz wird dem Staplerfahrer optisch und/oder akustisch eine Gefahr signalisiert. Zusätzlich zu dieser Warnung reduzieren manche Gabelstapler ihre Fahrgeschwindigkeit. Des Weiteren kann die Person durch ein akustisches Signal des Transponders gewarnt werden. Voraussetzung ist aber, dass alle Personen, die sich in dem Einsatzbereich von Gabelstaplern aufhalten können, einen entsprechenden Transponder tragen. Mit Transpondersystemen erhält der Fahrer keine Ortsinformation. Anhand einer konfigurierbaren Reichweite kann der Abstand einer Person zum Stapler auch nur ungefähr abgeschätzt werden. Damit Staplerfahrer beim Verlassen ihres Staplers ebenfalls geschützt sind, müssen sie ebenfalls einen Transponder tragen, der so konfiguriert ist, dass er sich erst beim Verlassen des Staplers "scharfschaltet". Ansonsten würde er seinen eigenen Stapler permanent lahmlegen. Erfahrungsberichte aus Versuchen liefern ein uneinheitliches Bild. Aufgrund der Reichweite von Transpondersystemen können in Bereichen, in denen sich mehrere Personen im Umfeld eines Gabelstaplers bewegen, die Fahrer durch mehrere Warnsignale irritiert werden. Ferner kann eine für den Fahrer nicht sichtbare Person zu einer Warnauslösung führen, die sich in einem Regalgang befindet und sich nicht in den Gefährdungsbereich bewegt. Auch Transpondersysteme eignen sich somit derzeit nicht als Sicherheitssysteme, sondern können allenfalls als Assistenzsysteme eingesetzt werden.
c) Radar-Sensoren:
   Neben komplexeren Anwendungen in der Luftfahrt, der Schifffahrt, im militärischen Bereich sowie der Verkehrsüberwachung sind Radar-Sensoren bekannt als Fahrerassistenzsysteme im Automobilbereich. Mit Hilfe einer Kollisionsschutz-Software können sie grundsätzlich gefährliche Situationen erkennen und dem Fahrer entsprechende Warnungen ausgeben. Die Detektionsentfernungen können bei entsprechend freier Sicht bis zu 200 m betragen. Damit die Radarstrahlen an möglichst vielen Objekten unterschiedlicher Textur reflektiert werden und diese nicht durchdringt, wurden für zivile Radarsysteme in der Vergangenheit Frequenzen im Bereich von 24 GHz verwendet. Zur Vermeidung von Störungen oder Beeinträchtigungen anderer Systeme wurde diese Frequenzen von den Regulierungsbehörden auf 79 GHz festgelegt. Aufgrund der hohen Frequenzen, der multiplen Hintergrundreflektionen sowie der kurzen Detektionsdistanzen ergibt sich fast immer ein ungünstiges Signal-/Rausch-verhältnis. Bei der Filterung von Objekten aus dem Rauschen kann es weiter vorkommen, dass ein großes Ziel ein kleineres mit ähnlicher Entfernung überdeckt. Zur Absicherung eines Staplers bedürfte es zur Abdeckung des geforderten Detektionsbereichs und aus der Forderung nach Redundanz mindestens 4 Radar-Sensoren. Ein Übersprechen ("Crosstalk") der reflektierten Signale ergibt sich hierbei zwangsläufig. Dieser Crosstalk muss ebenfalls herausgefiltert werden, was das Signal-/Rauschverhältnis weiter verschlechtert. Das Erkennen einer Person ist daher schwieriger als mit anderen Systemen und erfordert eine sehr leistungsfähige Hardware. Da Stapler auch im Außenbereich zum Einsatz kommen, kann es ähnlich wie im Automobilbereich schließlich auch zu Störungen bei Regen kommen. Hier warnen die Radarsensoren gelegentlich auch vor am Stoßfänger abfließendem Wasser. Je nach Verbauort können diese Probleme auch an einem Stapler auftreten. Die Anforderungen an die funktionale Sicherheit von Sicherheitssystemen bedingen eine permanente Eigenüberwachung des Systems. Im Falle von Radar-Systemen ist dies derzeit nur mit sehr hohem Aufwand zu realisieren. Somit eignen sich auch Radar-Systeme derzeit nicht als Sicherheitssysteme, sondern können allenfalls als Assistenzsysteme eingesetzt werden.
d) Bild-/Videokameras:
   Bild- bzw. Videokameras liefern dem Bediener ein Bild, das er interpretieren muss. Durch die Verwendung von Weitwinkelobjektiven und einem von oben nach unten gerichteten Blickwinkel erlauben diese Systeme keine räumliche Zuordnung. Gerade bei sich wechselnden Sichtbedingungen, wie sie bei einem Gabelstapler oft gegeben sind, wenn dieser von einer Lagerhalle ins Freie oder umgekehrt fährt, sind hohe Anforderungen an die Signalverarbeitung von Kamerasystemen gegeben. Je nach System und Umgebung ist die Bildqualität mal gut, mal weniger gut. Die Anforderungen an die funktionale Sicherheit von Sicherheitssystemen bedingen eine permanente Eigenüberwachung des Systems. Im Falle von Bild-/Videokamerasystemen ist dies derzeit nur mit sehr hohem Aufwand zu realisieren. Somit eignen sich auch Bild-/Videokameras derzeit nicht als Sicherheitssysteme, sondern können allenfalls als Assistenzsysteme eingesetzt werden.
e) Objekterkennung mittels einer oder mehreren 3D-Kameras:
   Die Objekterkennung durch 3D-Kameras erfordert derzeit noch einen sehr hohen Aufwand. Um die Umgebung dreidimensional mit Textur erfassen zu können, muss eine 3 D-Karte der Umgebung aus einer Kombination von Farb- und Tiefenkamera erzeugt werden. Für die Erkennung und Differenzierung von Menschen und Objekten sind Verfahren notwendig, die deren charakteristische Merkmale differenzieren können. Hierzu ist eine Systemdatenbank erforderlich, in der alle denkbaren Muster und Situationen hinterlegt sein müssen. Für eine schnelle und sichere Erkennung ist ein großer Hard- und Software-Aufwand erforderlich. In Logistikbereichen mit ständig wechselnden Szenarien und einer nahezu unendlichen Kombination von Objekten sind die Ergebnisse derzeit noch sehr ungenau. Probleme ergeben sich weiter unter anderem, wenn der Stapler über Bodenwellen oder Schweller fährt. Durch die Nickbewegung wird der Erfassungswinkel entweder verkürzt oder verlängert. Problematisch sind auch Situationen, bei denen Personen halbverdeckt aus einem Regalgang hervortreten oder bei Personen, die auf dem Boden liegen. Diese werden nur schwer bzw. gar nicht erkannt. Diese Schwachpunkte könnten nur mit Hilfe eines anderen, d. h. zusätzlichen Hinderniserkennungssystems gelöst werden. Die Anforderungen an die funktionale Sicherheit von Sicherheitssystemen bedingen eine permanente Eigenüberwachung des Systems. Im Falle von 3D-Kamera-systemen ist dies derzeit nur mit sehr hohem Aufwand zu realisieren. Daher eignen sich auch 3D-Kamerasysteme derzeit nicht als Sicherheitssysteme, sondern können allenfalls als Assistenzsysteme eingesetzt werden.
f) Objekterkennung mittels einer Stereokamera:
   Ein Stereokamerasystem besteht aus zwei, in definiertem Abstand nebeneinander und parallel zu ihren optischen Achsen fixierten 2D-Kameras, aus deren Stereo-Doppelbildern die Tiefeninformation errechnet werden kann. Stereokameras liefern ein hochaufgelöstes Bild. Für eine Beeinflussung der Fahrgeschwindigkeit bis zu einem Stopp muss aber eine eindeutige und reaktionsschnelle Objekterkennung erfolgen. Hierzu müssten analog zu der Objekterkennung mit 3D-Kamerasystemen alle denkbaren Muster und Situationen in der Systemdatenbank hinterlegt sein. Für eine schnelle und sichere Erkennung ist somit ein großer Hard- und Software-Aufwand erforderlich. Stereo-Kamerasysteme haben ferner den Nachteil, dass die Aufnahmen der Umgebung stark von künstlichen und natürlichen externen Lichtquellen beeinflusst werden. Lichtintensität und Positionen dieser Lichtquellen variieren. Aufgrund des sich hierdurch verändernden Schattenwurfs ergeben sich Fehler bei der Zuordnung der Bildelemente innerhalb der Doppelbilder. Insbesondere texturfreie Oberflächen wie beispielsweise Kunststofffußbodenplatten können die Distanzwerte aufgrund von Totalreflexion verfälschen. Die Abmessungen von Stereokamerasystemen hängen weiter vom Abstand der beiden Kamerasysteme zueinander ab. Dieser Abstand ist wiederum bedingt durch die gewünschte Disparität, die durch das System erreicht werden soll. Die Anforderungen an die funktionale Sicherheit von Sicherheitssystemen bedingen eine permanente 100%ige Funktionssicherheit des Systems. Für ein Stereo-Kamerasystem würde dies einen periodischen Abgleich mit einem Referenzmuster erfordern. In einem dynamischen Logistikbetrieb ist dies nicht realisierbar. Die bedeutet, dass sich auch Stereokamerasysteme derzeit nicht als Sicherheitssysteme eignen, sondern allenfalls als Assistenzsysteme eingesetzt werden können.
g) Laserscanner:
   Laserscanner erfassen die Umgebung im industriellen Umfeld in einer Ebene. Dabei wird ein einzelner Laserstahl über einen mechanisch bewegten Spiegel periodisch abgelenkt. Somit liegen nur 2D-Tiefendaten vor. Derartige Scanner werden derzeit an AGVs zur Absicherung nach vorne und hinten eingesetzt. Ihr Detektionsbereich liegt bei 10 bis 50 m. Durch zusätzliche mechanische Schwenk- bzw. Nickbewegungen des gesamten Laserscanner-Systems können mehrere Ebenen der Umgebung erfasst werden, sodass für diese 3D-Daten vorliegen. Aufgrund der mechanischen Ablenkbewegungen müssen die Scanner mechanisch sehr robust aufgebaut und entsprechend an dem Fahrzeug verbaut sein. Der Scanbereich kann ca. 180° horizontal und ca.120° vertikal betragen. Scan-Wiederholraten liegen bei über einer Sekunde. Im Nahbereich eines Staplers sind derartige Latenzzeiten nicht akzeptabel. Die Anforderungen an die funktionale Sicherheit von Sicherheitssystemen bedingen eine permanente 100%-ige Eigenüberwachung der Funktion des Systems sowie einen periodischen Abgleich mit einem Referenzmuster erfordern. Im Falle von Laserscannern ist dies derzeit nur mit sehr hohem Aufwand möglich. Laserscanner eignen sich somit derzeit nicht als Sicherheitssysteme, sondern können allenfalls als Assistenzsysteme eingesetzt werden.

### Zusammenfassung und Vorteile der Erfindung

Die Erfindung betrifft eine Vorrichtung gemäß Anspruch 1, eine Kachel gemäß Anspruch 10, ein Sensornetz gemäß Anspruch 14, ein maschinell oder automatisch gesteuertes bewegliches Gerät gemäß Anspruch 15 und ein Verfahren gemäß Anspruch 16.

Vorteilhafte Weiterbildungen der Erfindung sind Gegenstand der abhängigen Ansprüche.

In einem ersten Aspekt der Erfindung basiert der erste Sensor und der zweite Sensor jeweils auf einem optischen Messprinzip. In einem zweiten Aspekt der Erfindung ist die Sicherheitssensorik redundant ausgelegt. Bevorzugt weist die Erfindung diese beiden Aspekte gleichzeitig auf.

Die Sicherheitssensorik ist vorzugsweise eine zweistufige Kollisionssensorik, wobei die Annäherungssensorik dazu konfiguriert ist, das Gerät bei einer Annährung eines Objektes oder einer Person an das Gerät oder einen Teil des Gerätes in einen Safety-Limited-Speed-Zustand (SLS) gemäß EN 61800 zu versetzen, und wobei die taktile Sensorik dazu konfiguriert ist, das Gerät bei einer Berührung des Gerätes oder eines Teil davon mit einem Objekt oder einer Person in einen Safe-Operating-Stop (SOS) gemäß EN 61800 zu versetzen. Dies führt zu einer besonders sicheren Mensch-Maschine-Kollaboration.

Die taktile Sensorik weist vorzugsweise Mittel auf, insbesondere eine entsprechende Sensorhaut oder Oberflächengestaltung, die dazu konfiguriert sind, einen etwaigen Nachlauf des Gerätes bei einem Stoppen der Bewegung des Gerätes oder eines Teils davon abzufedern oder zu kompensieren. Dies erhöht die Sicherheit beim Betrieb der erfindungsgemäßen Vorrichtung bzw. des damit versehenen Gerätes weiter.

In einer bevorzugten Ausführungsform der Erfindung ist die Sicherheitssensorik eigensicher und redundant ausgelegt. Vorzugsweise ist die Sicherheitssensorik mindestens zweikanalig ausgebildet.

Für eine Erhöhung der Sicherheit beim Betrieb der erfindungsgemäßen Vorrichtung bzw. des damit versehenen Gerätes ist insbesondere, wenn die Annäherungssensorik oder die taktile Sensorik oder beide redundant ausgebildet oder vorgesehen ist.

In einer bevorzugten Ausführungsform der Erfindung sind Mittel für eine kontinuierliche Eigenüberwachung des mindestens einen ersten Sensors und/oder des mindestens einen zweiten Sensors vorgesehen, insbesondere für die optischen Abstandssensoren und die taktilen Sensoren.

Eine weitere Erhöhung der Sicherheit beim Betrieb der erfindungsgemäßen Vorrichtung bzw. des damit versehenen Gerätes wird erreicht, wenn die Annäherungssensorik in ihrer Auflösung und/oder ihrem erfassten Abstandsbereich diversitär ausgelegt ist. Damit wird ermöglicht, für einen jeweils gleichen Abstand jeweils mehrere unterschiedliche Messwerte bereitzustellen.

Vorteilhaft für eine Erhöhung der Sicherheit beim Betrieb der erfindungsgemäßen Vorrichtung bzw. des damit versehenen Gerätes ist weiter, wenn Mittel zur zeitweiligen oder permanenten Überwachung der Funktion der Sicherheitssensorik oder zur zeitweiligen oder permanenten Überwachung von einem oder mehreren Funktionsparametern der Sicherheitssensorik vorgesehen sind.

In einem Aspekt der Erfindung kann die Annäherungssensorik dazu konfiguriert sein, nur einen Messpunkt zu erfassen und auszuwerten. Alternativ kann die Annäherungssensorik dazu konfiguriert sind, gleichzeitig oder sequentiell eine Mehrzahl von Messpunkten zu erfassen und auszuwerten.

Für die Annäherungssensorik hat es sich als vorteilhaft erwiesen, wenn sie einen oder mehrere optische Time-of-Flight-Sensoren, Reflektionssensoren oder Structured-Light-Sensoren aufweist. Für die taktile Sensorik haben sich optische Streulichtsensoren als besonders vorteilhaft herausgestellt.

Die erfindungsgemäße Vorrichtung bzw. das damit versehenen Gerät weist vorzugsweise ein Safety Integrity Level (SIL) gemäß EN ISO 10218 von mindestens 2, besonders bevorzugt von mindestens 3 auf.

Die erfindungsgemäße Vorrichtung bzw. das damit versehene Gerät weist vorzugsweise ein Performance Level (PL) gemäß EN ISO 10218 von mindestens d auf.

Durch die von der erfindungsgemäßen Vorrichtung gewährleistete hohe Betriebssicherheit bei einer Mensch-Maschine-Kollaboration eignet sie sich besondere für Industrieroboter und ganz besonders für Industrieroboter mit einem Handlinggewicht von bis zum 300 kg und/oder einer Verfahrgeschwindigkeit von mindestens 2500 mm/s.

Weiter eignet sich die erfindungsgemäße Vorrichtung besonders zur Verwendung beim Betrieb von AGVs ("Automated Guided Vehicle") bzw. automatisch gesteuerten Fahrzeugen, Haushaltsrobotern, Pflegerobotern, Gabelstaplern, insbesondere maschinell oder automatisch gesteuerten Gabelstaplern, maschinell oder automatisch gesteuerten Geräten zur Verwendung in einem Krankenhaus oder für den häuslichen Pflegebereich, oder anderen beweglichen medizintechnischen Geräten.

Vorteilhaft ist weiter, dass die Sicherheitssensorik der erfindungsgemäßen Vorrichtung in eine oder mehrere Kacheln integriert oder auf der Oberfläche von einer oder mehreren Kacheln angebracht sein kann, wobei die Kacheln vorzugsweise zum Anbringen auf einer Oberfläche des Gerätes oder zum Integrieren in eine Oberfläche des Gerätes ausgebildet sind. Dies erlaubt einen modularen Aufbau und ist kostengünstig. Zudem ist so auch eine Nachrüstung bestehender Geräte möglich.

Die erfindungsgemäße Vorrichtung, die erfindungsgemäße Kachel, das erfindungsgemäße Sensornetz und das erfindungsgemäße Verfahren kann insbesondere auch bei oder als Personenschutzsystem(en) für Fahrerlose Transportfahrzeuge ("FTF") eingesetzt werden. Insofern kann das erfindungsgemäße maschinell oder automatisch gesteuerte bewegliche Gerät auch eine fahrerloses Transportfahrzeuge mit einem solchen Personenschutzsystem sein.

### Kurze Beschreibung der Zeichnungen

Die Erfindung wird anhand der Zeichnungen und der nachfolgenden Beschreibung näher erläutert.

Die Figur 1 zeigt eine Prinzipskizze des Zusammenwirkens eines Roboters als maschinell gesteuertes Handhabungsgerät, der mit der erfindungsgemäßen Vorrichtung ausgerüstet ist, mit einem Bediener.

Die Figur 2 zeigt eine Prinzipskizze von Annäherungssensorik und taktiler Sensorik.

Die Figur 3 zeigt ein Flussdiagramm zum Zusammenwirken von Sicherheitssensorik und Sicherheitssteuerung und zur Übermittlung der betreffenden Signale an einen Sensorknotenpunkt.

Die Figur 4 zeigt eine Detaildarstellung der Sensierung der Sicherheitssensorik.

Die Figur 5 zeigt ein Flussdiagramm zur Arbeit der Sicherheitssensorik.

Die Figur 6 zeigt eine Prinzipskizze einer Draufsicht von oben auf ein AGV, das mit der erfindungsgemäßen Vorrichtung und mehreren Sensorkacheln ausgerüstet ist.

Die Figur 7 zeigt eine Prinzipskizze der Seitenansicht des AGV von Fig. 6.

Die Fig. 8 zeigt eine Draufsicht auf einen Teil der Rückseite eines Gabelstaplers, der mit einer erfindungsgemäßen Sensorkachel bzw. der erfindungsgemäßen Vorrichtung ausgerüstet ist.

Die Fig. 9 zeigt eine Ansicht der Oberseite bzw. Sensorseite einer Sensorkachel ohne Sensorschaum.

Die Fig. 10 zeigt eine Ansicht der Rückseite der Sensorkachel von Fig. 9.

Die Fig. 11 zeigt eine erste Sensorkachel gemäß Fig. 9, die am Rand mit einem Rahmen aus Sensorschaum abgedeckt ist, und die mit einer zweiten Sensorkachel gemäß Fig. 9 ohne Sensorschaumrahmen elektrisch verbunden ist.

Die Fig. 12 zeigt eine Mehrzahl von Sensorkacheln gemäß Fig. 11, die auf der Oberfläche eines Roboterarms angeordnet und miteinander verschaltet sind, sodass sie ein Sensornetz bilden.

### Beschreibung von bevorzugten Ausführungsformen der Erfindung

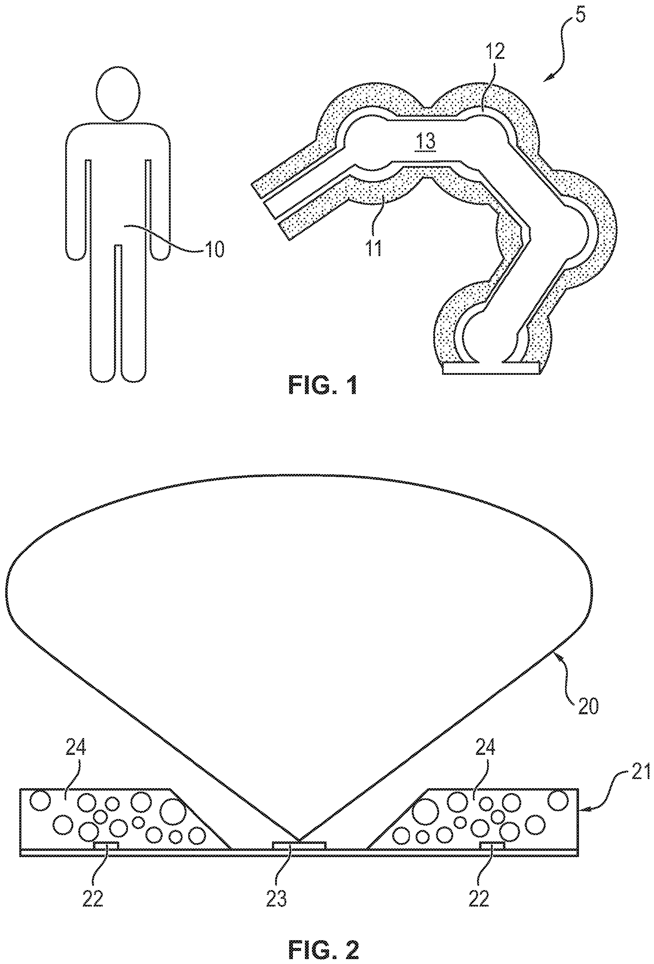

Die Figur 1 zeigt eine Prinzipskizze des Zusammenwirkens eines ausschnittweise und schematisch dargestellten Roboters 5 als maschinell gesteuertes Handhabungsgerät, der mit der erfindungsgemäßen Vorrichtung ausgerüstet ist, mit einem Bediener 10, d. h. einem Menschen. Der Roboter 5 hat einen Roboterarm 13 mit einem ersten Schutzbereich 11, der von einer Abstandssensorik oder Annäherungssensorik überwacht wird, und einen zweiten Schutzbereich 12, der von einer taktilen Sensorik überwacht wird. Der Roboter 5 ist vorzugsweise ein Industrieroboter mit einem Handlinggewicht bis zu 300 kg und einer Verfahrgeschwindigkeit von mindestens 2500 mm/s.

Die Figur 2 zeigt eine Prinzipskizze der Sicherheitssensorik gemäß Figur 1. Die Annäherungssensorik 11 ist durch einen oder mehrere Annäherungssensoren 23 bzw. einen oder mehrere Abstandssensoren mit zugehörigen Signalwandlern ausgebildet. Figur 2 zeigt auch skizzenhaft den Messbereich 20 der Annäherungssensorik 11. Die taktile Sensorik ist durch einen oder mehrere taktile Sensoren 22 und mit zugehörigen Signalwandlern ausgebildet. Die taktilen Sensoren sind vorzugsweise durch einen Sensorschaum 24 überdeckt, während die Annäherungssensoren 23 vorzugsweise frei liegen. Figur 2 zeigt auch den Messbereich 21 der taktilen Sensorik.

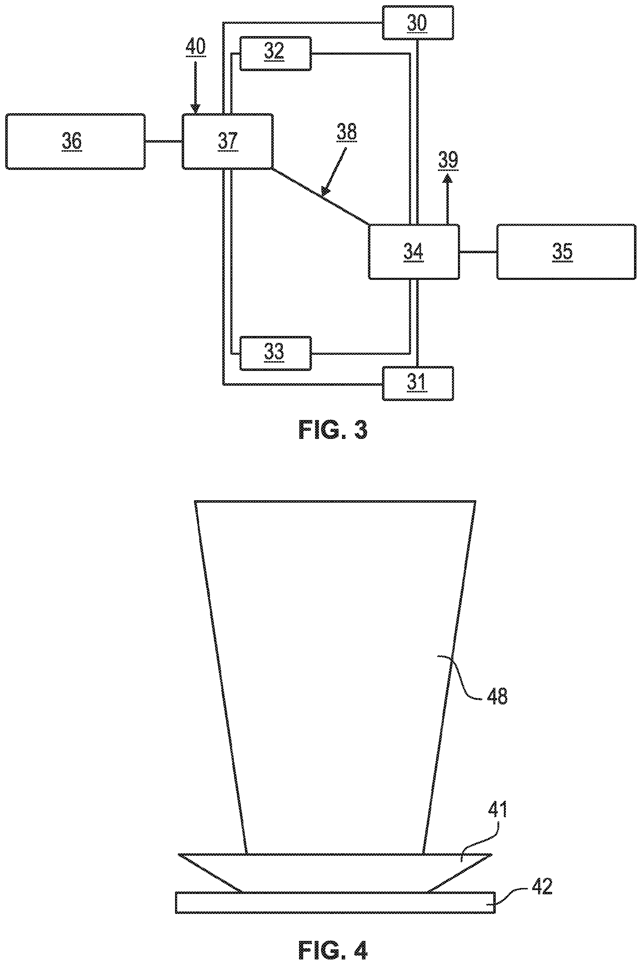

Die Figur 3 zeigt ein Flussdiagramm zum Zusammenwirken von Sicherheitssensorik und Sicherheitssteuerung und zur Übermittlung der betreffenden Signale an einen Sensorknotenpunkt. Ein erster Kontaktsensor 30 ist dabei mit einem ersten Controller 37 und mit einem zweiten Controller 34 verbunden. Ein zweiter Kontaktsensor 31 ist ebenfalls mit dem ersten Controller 37 und dem zweiten Controller 34 verbunden. Gleiches gilt für die dritten und vierten Kontaktsensoren 32, 33, die jeweils mit dem ersten Controller 37 und dem zweiten Controller 34 verbunden sind. Weiter ist ein erster Distanzsensor 36 vorgesehen, der mit dem ersten Controller 37 verbunden ist, und ein zweiter Distanzsensor 35, der mit dem zweiten Controller 34 verbunden ist. Figur 3 zeigt daneben, dass der erste und der zweite Controller 37, 34 über ein Kommunikationsmittel 38 zur Querüberprüfung verbunden sind. Der erste Controller 37 weist weiter ein Kommunikationsmittel 40 zur Kommunikation von und/oder zu weiteren Knotenpunkten auf, und auch zweite Controller 34 weist ein Kommunikationsmittel 35 zur Kommunikation von und/oder zu weiteren Knotenpunkten auf.

Besonders vorteilhaft wird eine solche Kombination in einem Sensornetz verwendet.

Die Figur 4 zeigt eine Detaildarstellung der Sensierung der Sicherheitssensorik. Dabei ist gezeigt, wie an einem Sensorknotenpunkt 42 eine Distanzsensierung 48 mit einem relativ weiten Messbereich zur Überwachung des ersten Schutzbereiches 11 und eine Kontaktsensierung 41 mit einem relativ engen Messbereich zur Überwachung des zweiten Schutzbereiches 12 zusammenwirken.

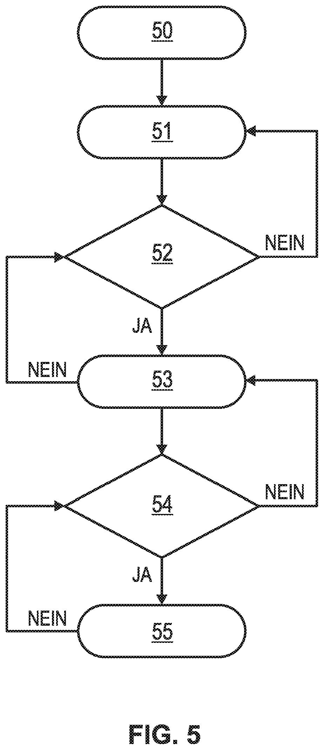

Die Figur 5 zeigt ein Flussdiagramm zur Arbeit der Sicherheitssensorik gemäß Figur 4 oder Figur 2. In einem Sensorinitialisierungsschritt 50 werden zunächst die Annäherungssensoren 23, 48, 35, 36 und die taktilen Sensoren 22, 41, 30, 31, 32, 33 initialisiert. Wenn alle Sensoren normal arbeiten, wird dies in einem Sensorausgabeschritt 51 als Sensorausgabe an die Sicherheitssensorik, beispielsweise über die Controller 34, 37 übermittelt. Wenn bei Betrieb des Roboters 5 dann ein Objekt oder ein Mensch 10 von den Annäherungssensoren 23, 48, 35, 36 in dem ersten Schutzbereich 11 detektiert wird, führt dies in einem Entscheidungsschritt 52 der Annäherungssensorik zu einer Meldung bzw. einer Sensorausgabe in Form eines Sensorausgabeschrittes 53 an die Controller 34, 37, dass sich ein Objekt bzw. ein Mensch 10 innerhalb des ersten Schutzbereiches 11 befindet. In einem Entscheidungsschritt 54 der taktilen Sensorik wird danach dann geprüft, ob das Objekt bzw. der Mensch 10 auch von der taktilen Sensorik, d. h. den taktilen Sensoren 22, 41, 30, 31, 32, 33, detektiert wird, d.h. ob sich das Objekt oder der Mensch 10 auch in dem zweiten Schutzbereich 12 befindet. Falls ja, führt das in einem Sensorausgabeschritt 55 zu einer entsprechenden Meldung an die Controller 34, 37.

In einem Aspekt der Erfindung ist vorgesehen, dass die Annäherungssensoren 23, 48, 35, 36 und die taktilen Sensoren 22, 41, 30, 31, 32, 33 jeweils auf einem optischen Messprinzip basieren, d. h. es werden optische Abstandssensoren sowie optisch-taktile Sensoren für die Erfassung eines Kontakts zwischen Mensch und Maschine bzw. Bediener 10 und Roboter 5 eingesetzt.

Bevorzugt ist weiter vorgesehen, dass die Annäherungssensoren 23, 48, 35, 36, d. h. die optischen Abstandssensoren, und die taktilen Sensoren 22, 41, 30, 31, 32, 33, d. h. die optischtaktilen Sensoren einer kontinuierlichen Eigenüberwachung unterliegen. Daneben (oder gegebenenfalls auch alternativ zu dieser kontinuierlichen Eigenüberwachung) sind die Annäherungssensoren 23, 48, 35, 36 und die taktilen Sensoren 22, 41, 30, 31, 32, 33 jeweils mindestens zweikanalig und damit redundant ausgelegt.

Für die Annäherungssensoren 23, 48, 35, 36 kommen mehrere optische Messprinzipien in Frage. Bevorzugt werden Time-of-Flight-Sensoren, Reflektionssensoren und/oder Structured-Light-Sensoren eingesetzt. Als taktile Sensoren 22, 41, 30, 31, 32, 33 werden optische Streulichtsensoren eingesetzt.

Die eingesetzten Sensoren oder Sensorsysteme können dabei entweder nur einen Messpunkt auswerten oder multiple Messpunkte.

Die verwendeten optischen Annäherungssensoren 23, 48, 35, 36 können Annäherungen bereits in einem Abstand von 2 m detektieren. Somit kann der Roboter 5 frühzeitig in einen "Safety-Limited-Speed" (SLS) Zustand versetzt werden.

Kommt es doch zu einer Berührung zwischen Mensch 10 und Roboter 5, so wird der Roboter 5 durch die Signale der taktilen Sensorik 22, 41, 30, 31, 32, 33 sofort in den Zustand "Safe Operating Stop" (SOS) = Sicherer Betriebshalt versetzt.

Ein eventueller Nachlauf des Roboters 5 wird durch die Nachgiebigkeit der taktilen Sensorhaut abgefedert, die vorzugsweise in Form des Sensorschaums 24 ausgebildet ist.

Somit sind sowohl die Annäherungssensoren als auch die taktilen Sensoren beides optische Sensoren, die jeweils 2-kanalig angeordnet werden. Durch diese Konfiguration, sowie die Fähigkeit ihre Funktion permanent selbst überwachen zu können, kann ein Safety Integrity Level von mindestens 2 und ein Performance Level von mindestens d erreicht werden,

In einer bevorzugten Ausführungsform der Erfindung sind die Annäherungssensorik und/oder die taktile Sensorik diversitär ausgelegt. Dazu wird die Annäherungssensorik und/oder die taktile Sensorik nicht nur redundant ausgelegt, sondern es werden bewusst verschiedene Sensorrealisierungen und keine baugleichen Einzelsysteme oder -komponenten verwendet. Dahinter steht die Idee, dass Systeme, die das Gleiche leisten, aber unterschiedlich realisiert sind, auch gegen eine gegebene Störung verschieden empfindlich oder unempfindlich sind und daher wahrscheinlich nicht alle gleichzeitig ausfallen. Vorzugsweise werden durch die diversitäre Auslegung somit für einen jeweils gleichen Abstand jeweils mehrere unterschiedliche, d. h. von unterschiedlichen Sensoren bereitgestellte und/oder über unterschiedliche optische Messprinzipien gewonnene Messdaten bereitgestellt.

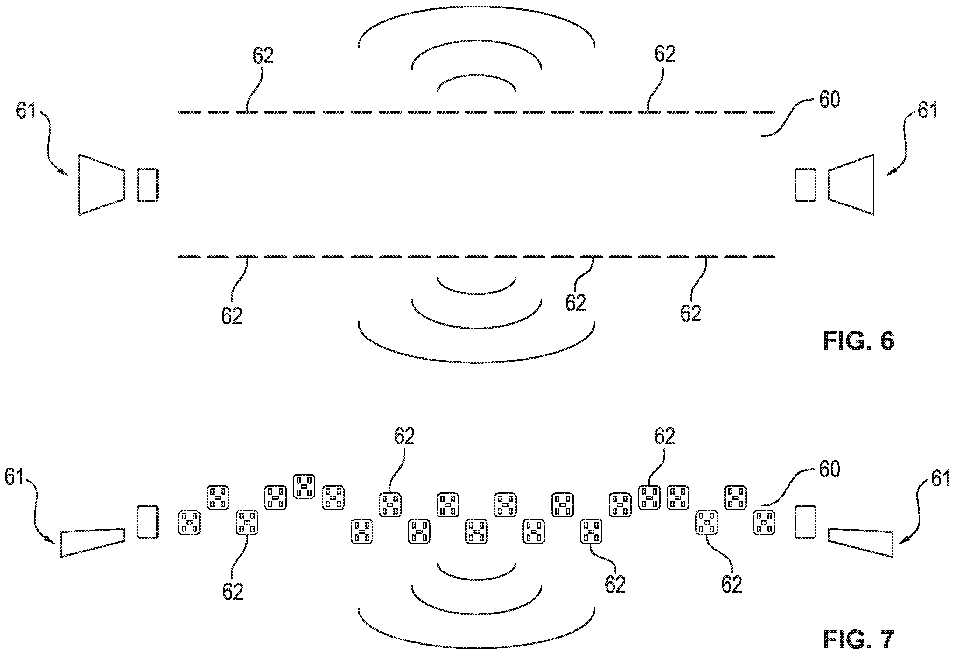

Die Figur. 6 zeigt eine weitere Ausführungsform der Erfindung. Dabei ist ein AGV 60 auf der Vorderseite und der Rückseite jeweils mit einem Front- bzw. Hecklaserscanner 61 versehen. Auf den Seitenflächen des AGV 60 sind jeweils vorzugsweise eine Vielzahl von Sensorkacheln 62 vorgesehen, wobei unter "Kacheln" hier allgemein diskrete flächige Bauelemente bzw. Substrate zu verstehen sind, die nicht zwingend viereckig sein müssen, sondern beispielsweise auch rund, sechseckig, dreieckig usw. sein können. Diese "Kacheln" müssen auch nicht zwingend eben sein, sondern können auch konvex oder konkav gekrümmt sein bzw. allgemein hinsichtlich ihrer Form an die Form der Oberfläche angepasst sein, auf der sie angebracht werden sollen. Die Figur 6 zeigt das AGV 60 in Draufsicht von oben, während die Figur 7 eine Seitenansicht davon zeigt. Die vorstehend im Zusammenhang mit dem Roboter 5 erläuterte Sicherheitssensorik ist hier in die Sensorkacheln 62 integriert oder auf der Oberfläche der Sensorkacheln 62 angebracht, welche selbst wiederum auf der Oberfläche des AGV 60 angebracht oder darin integriert sind. In den Figuren 6 und 7 ist jeweils auch der Erfassungsbereich der Abstandssensorik bzw. Annäherungssensorik der Sicherheitssensorik angedeutet, welcher dem ersten Schutzbereich 11 gemäß Figur 1 entspricht. Ansonsten ist der Betrieb der Aufbau und Betrieb der erfindungsmäßen Vorrichtung gemäß Figur 6 und 7 analog zu dem Ausführungsbeispiel gemäß den Figuren 1 bis 5. Der Roboter 5 ist lediglich durch ein AGV 60 ersetzt und die Sicherheitssensorik ist nun in die Sensorkacheln 62, d. h. diskrete flächige Bauelemente integriert, die nach Bedarf an verschiedenen Stellen vorzugsweise auf der Oberfläche des AGV 60 aufgebracht sind. Selbstverständlich können die Sensorkacheln 61 auch bei dem Roboter 5 bzw. dem Ausführungsbeispiel gemäß den Figuren 1 bis 5 eingesetzt werden.

Die Verwendung der Sensorkacheln 62 erlaubt eine flexible modulare Realisierung der erfindungsgemäßen Vorrichtung. Insbesondere ermöglichen die Sensorkacheln 61 eine kostengünstige Ausrüstung bzw. Nachrüstung eines bewegten Gerätes mit den Kacheln 61.

Die Ausführungsform gemäß Figur 6 und 7 gewährleistet eine seitliche Anprallabsicherung des AGV 60 gegenüber Fußgängern, Radfahrern und anderen Fahrzeugen oder Objekten.

Das AGV 60 kann beispielsweise ein Gabelstapler, ein Haushaltsroboter, ein AGV aus dem Bereich der Krankenhauslogistik (z. B. ein mobiler Essenswagen), ein selbstfahrendes Auto, oder ein anderes bewegtes Medizingerät sein. Primäres Ziel ist dabei stets eine Kollision des bewegten Gerätes mit Personen, Patienten, Kindern, Krankenhausbesuchern, Verkehrsteilnehmern, Fußgängern, anderen bewegten oder unbewegten Objekten usw. zu vermeiden bzw. diese zu schützen.

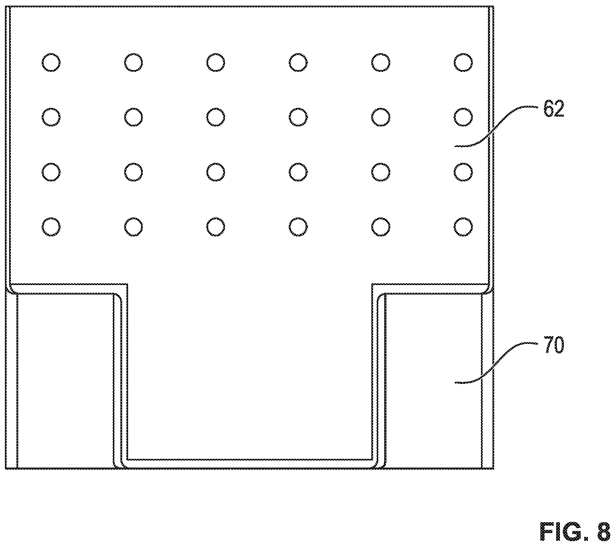

Die Fig. 8 zeigt dazu als konkrete Ausführungsform eine Draufsicht auf einen Teil der Rückseite 70 eines Gabelstaplers, insbesondere der Rückseite des Heckgewichts des Gabelstaplers, der mit einer erfindungsgemäßen Sensorkachel 62 bzw. der erfindungsgemäßen Vorrichtung ausgerüstet ist.

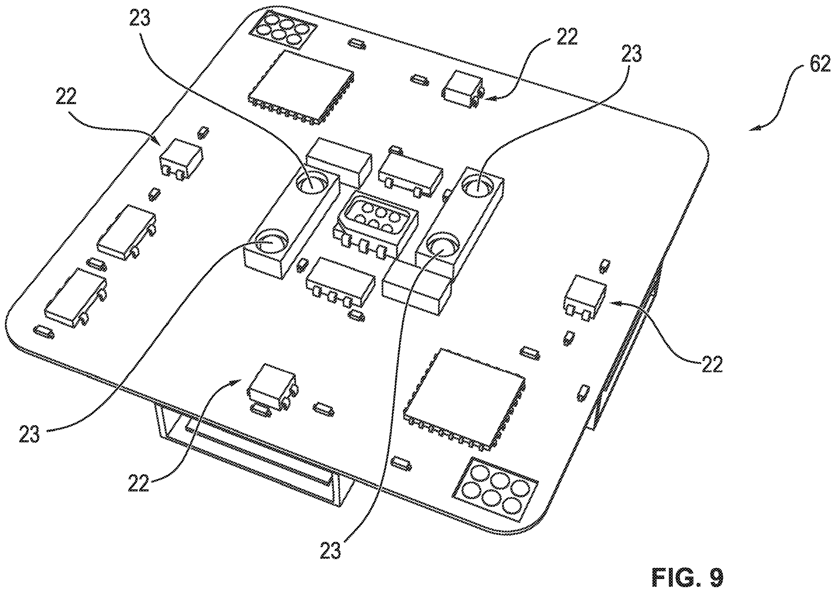

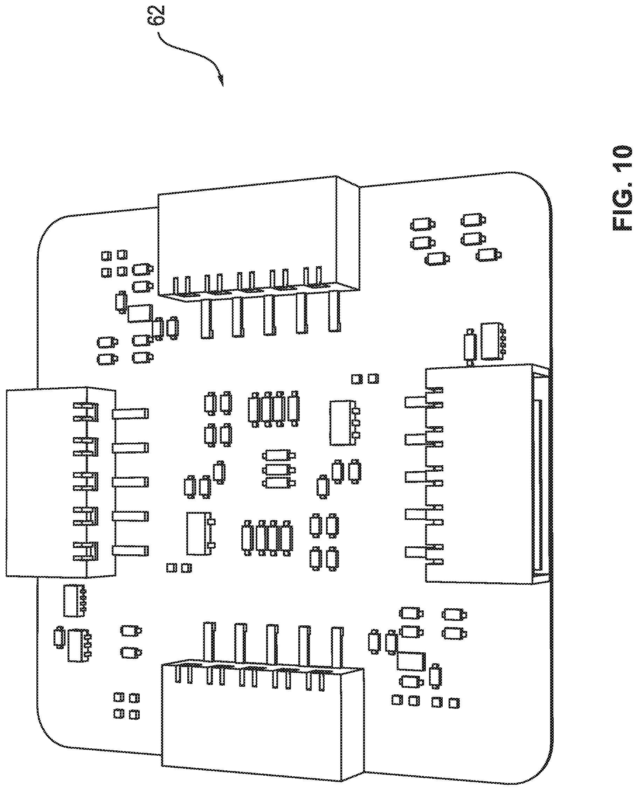

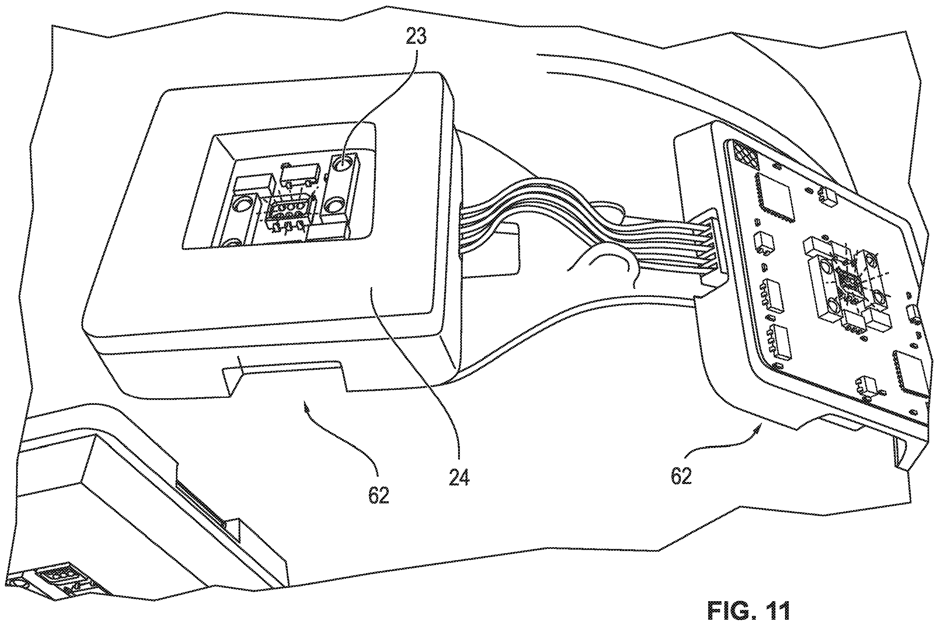

Die Fig. 9 zeigt eine Ansicht der Oberseite bzw. Sensorseite einer Sensorkachel 62 ohne Sensorschaum abdeckenden Sensorschaum 24. Man erkennt, dass die Sensorkachel 62 im erläuterten Beispiel im Randbereich im Bereich der Mitte der Seitenkante jeweils einen taktilen Sensor 22, d. h. insgesamt vier taktile Sensoren 22, aufweist. Daneben sind im Bereich der Mitte der Sensorkachel 62 im erläuterten Beispiel insgesamt vier Annäherungssensoren 23 vorgesehen, die insgesamt beispielsweise in Form eines Kreuzes, eines Rechteckes oder auf einem Kreis angeordnet sein können. Die Sensoren 22 sind taktile Sensoren und vorzugsweise mit einem Sensorschaum 24 abgedeckt, wie das in Fig. 11 gezeigt ist. Die Annäherungssensoren 23 sind vorzugsweise zwei Time-of-Flight Sensoren mit einem typischen Mess- oder Erfassungsbereich von 50 cm bis 100 cm, z. B. 80 cm, sowie zwei Proximity-Sensoren mit einem typischen Mess- oder Erfassungsbereich von 10 cm bis 40 cm, z. B. 30 cm. Die Sensorkachel 62 weist weiter zwei Mikrocontroller auf der Kachel 62 auf oder ist zumindest mit diesen elektrisch verbunden, wobei die beiden Mikrocontroller sowohl sich gegenseitig überwachen als auch jeweils alle Sensoren 22, 23, die sich auf der Sensorkachel befinden, wie das schon mit Hilfe von Fig. 3 erläutert worden ist. Auf der Sensorkachel 62 befinden sich somit in diversitärer Auslegung drei Arten von verschiedenen Sensoren. Die Fig. 10 zeigt die Ansicht der Rückseite der Sensorkachel von Fig. 9.

Die Fig. 11 zeigt als Ausführungsbeispiel eine erste Sensorkachel 62 gemäß Fig. 9, die am Rand mit einem Rahmen aus Sensorschaum 24 abgedeckt ist, und die mit einer zweiten Sensorkachel 62 gemäß Fig. 9 ohne Sensorschaumrahmen elektrisch verbunden ist. Der Sensorschaum 24 deckt die vier taktilen Sensoren 22 auf der Sensorkachel 62 ab und lässt die vier Annäherungssensoren 23 in der Mitte frei. Die zweite Sensorkachel ist im Beispiel gemäß Fig. 11 nicht mit einem Sensorschaum versehen, ein solcher kann dort jedoch auch vorgesehen sein.

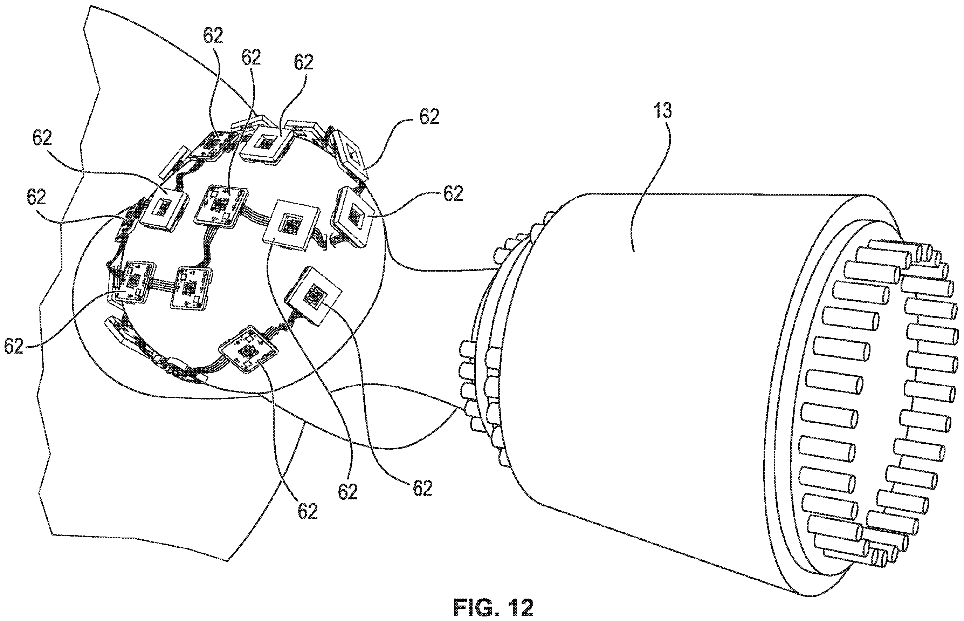

Die Fig. 12 zeigt eine Mehrzahl von Sensorkacheln gemäß Fig. 9 oder Fig. 11, die auf der Oberfläche eines Roboterarms 13 angeordnet und miteinander verschaltet sind. Die einzelnen Kacheln 62 sind dabei in Form eines Sensornetzes miteinander verbunden bzw. verschaltet. Dieses Sensornetz lässt sich vorteilhaft nachrüsten oder einer gewünschten zu überwachenden Oberfläche überstreifen.

Bei den vorstehenden Ausführungsbeispielen ist bevorzugt vorgesehen, dass die einzelnen Mikrocontroller bzw. der erste Controller 34 und der zweite Controller 37 in üblicher Weise über einen CAN-Bus verbunden sind, der die Signale aufnimmt bzw. sammelt und weiterleitet. Dazu kann der CAN-Bus mit einer speicherprogrammierbaren Steuerung (SPS) in Verbindung stehen, die aus den Daten der einzelnen Sensoren insbesondere Bahndaten eines sich annähernden Objektes berechnet oder abschätzt, und aus dem Ergebnis dieser Berechnung bzw. Abschätzung beispielsweise eine Selbsthemmung des Roboters 5 oder des sonstigen beweglichen Gerätes bewirkt.

Weiter ist bei den vorstehenden Ausführungsbeispielen vorzugsweise vorgesehen, dass die einzelnen Sensoren auf der Sensorkachel 62 auch nur gruppenweise bzw. nur teilweise scharfgestellt werden können, um so bei Bedarf Energie einzusparen.

Die Dichte und die räumliche bzw. örtliche Anordnung der Sensorkacheln 62 bzw. allgemein der eingesetzten Sensoren auf dem Objekt, auf dem sie sich befinden, hängt bei den erläuterten Ausführungsbeispielen von verschiedenen Faktoren wie dem gewünschten Messbereich, der gewünschten Auflösung, dem vorgegebenen Bewegungsbereich des Roboters 5 oder sonstigen beweglichen Gerätes, den Dimensionen der Sensorkachel u. a. ab. Die Kacheln 62 sind in dieser Hinsicht flexibel einsetzbar, sodass die erfindungsgemäße Vorrichtung einfach an den Bedarf im Einzelfall abgestimmt werden kann. Dabei ist auch zu berücksichtigen, ob sich die Messbereiche der einzelnen Sensorkacheln 62 überlappen sollen, um so eine lückenlose Überwachung einer Oberfläche oder Bereiches zu gewährleisten, oder ob das nicht erforderlich ist.

### Bezugszeichenliste

- 5: Roboter

- 10: Bediener
- 11: erster Schutzbereich (Abstandssensorik/Annäherungssensorik)
- 12: zweiter Schutzbereich (taktile Sensorik)
- 13: Roboterarm

- 20: Messbereich Annäherungssensorik
- 21: Messbereich taktile Sensorik
- 22: taktiler Sensor und Signalwandler taktile Sensorik
- 23: Sensor Annäherungsmessung/-sensorik
- 24: Sensorschaum

- 30: Kontaktsensor 1
- 31: Kontaktsensor 2
- 32: Kontaktsensor 3
- 33: Kontaktsensor 4
- 34: Controller 2
- 35: Distanzsensor 2 (TOF, Reflektivität, strukturiertes Licht, ...)
- 36: Distanzsensor 1 (TOF, Reflektivität, strukturiertes Licht, ...)
- 37: Controller 1
- 38: Kommunikationsmittel zur Querüberprüfung
- 39: Kommunikationsmittel zu/von weiteren Knotenpunkten
- 40: Kommunikationsmittel von/zu weiteren Knotenpunkten

- 41: Kontaktsensierung
- 42: Sensorknotenpunkt
- 48: Distanzsensierung

- 50: Sensorinitialisierungsschritt
- 51: Sensorausgabeschritt
- 52: Entscheidungsschritt Annäherungssensorik
- 53: Sensorausgabeschritt
- 54: Entscheidungsschritt taktile Sensorik
- 55: Sensorausgabeschritt
- 60: AGV
- 61: Laserscanner
- 62: Sensorkachel

- 70: Gabelstapler

## Patentansprüche

1. Vorrichtung zur Sicherung eines maschinell oder automatisch gesteuerten beweglichen Gerätes, insbesondere eines Handhabungsgerätes wie eines Roboters (5) oder eines AGV (60), mit einer Sicherheitssensorik zur Detektion von Objekten in einem Arbeitsraum, einem Abstand oder einer Umgebung des Gerätes und mit einer Sicherheitssteuerung, die dazu konfiguriert ist, mit einer Gerätesteuerung des Gerätes zusammenzuwirken und dabei in Abhängigkeit von Signalen der Sicherheitssensorik sicherheitsrelevante Gerätefunktionen zu steuern, wobei die Sicherheitssensorik eine taktile Sensorik mit mindestens einem ersten Sensor (22, 41, 30, 31, 32, 33) und eine Annäherungssensorik mit mindestens einem zweiten Sensor (23, 48, 35, 36) umfasst, **dadurch gekennzeichnet, dass** wobei der erste Sensor (22, 41, 30 31, 32, 33) und der zweite Sensor (23, 48, 35, 36) jeweils auf einem optischen Messprinzip basiert und/oder dass die Sicherheitssensorik redundant ausgelegt ist und **dadurch gekennzeichnet, dass** die taktile Sensorik einen oder mehrere optische Streulichtsensoren aufweist.

2. Vorrichtung nach Anspruch 1, **dadurch gekennzeichnet, dass** die Sicherheitssensorik eine zweistufige Kollisionssensorik ist, wobei die Annäherungssensorik dazu konfiguriert ist, das Gerät bei einer Annährung eines Objektes oder einer Person (10) an das Gerät oder einen Teil des Gerätes in einen Safety-Limited-Speed-Zustand (SLS) gemäß EN 61800 zu versetzen, und wobei die taktile Sensorik dazu konfiguriert ist, das Gerät bei einer Berührung des Gerätes oder eines Teil davon mit einem Objekt oder einer Person (10) in einen Safe-Operating-Stop (SOS) gemäß EN 61800 zu versetzen.

3. Vorrichtung nach Anspruch 1 oder 2, **dadurch gekennzeichnet, dass** die taktile Sensorik Mittel (24) aufweist, insbesondere eine entsprechende Sensorhaut oder Oberflächengestaltung, die dazu konfiguriert sind, einen etwaigen Nachlauf des Gerätes bei einem Stoppen einer Bewegung des Gerätes oder eines Teils davon abzufedern oder zu kompensieren.

4. Vorrichtung nach mindestens einem der vorangehenden Ansprüche, **dadurch gekennzeichnet, dass** die Sicherheitssensorik eigensicher und redundant ausgelegt ist.

5. Vorrichtung nach mindestens einem der vorangehenden Ansprüche, **dadurch gekennzeichnet, dass** der oder die ersten Sensoren (22, 41, 30, 31, 32, 33) optische Abstandssensoren sind und dass der oder die zweiten Sensoren (23, 48, 35, 36) optisch-taktile Sensoren sind.

6. Vorrichtung nach mindestens einem der vorangehenden Ansprüche, **dadurch gekennzeichnet, dass** die Annäherungssensorik in ihrer Auflösung und/oder ihrem erfassten Abstandsbereich diversitär ausgelegt ist, so dass für einen jeweils gleichen Abstand jeweils mehrere unterschiedliche Messwerte geliefert werden.

7. Vorrichtung nach mindestens einem der vorangehenden Ansprüche, **dadurch gekennzeichnet, dass** die taktile Sensorik einen Schaum (24) aufweist oder mit einem Schaum (24) verbunden oder in einen (24) Schaum integriert ist.

8. Vorrichtung nach mindestens einem der vorangehenden Ansprüche, **dadurch gekennzeichnet, dass** das Gerät ein Roboter (5), insbesondere ein Industrieroboter oder Haushaltsroboter ist, dass das Gerät ein automatisch gesteuertes Fahrzeug bzw. ein AGV (60) ist, dass das Gerät ein Gabelstapler (70), insbesondere ein maschinell oder automatisch gesteuerter Gabelstapler ist, dass das Gerät ein maschinell oder automatisch gesteuertes Gerät zur Verwendung in einem Krankenhaus oder für den häuslichen Pflegebereich ist, oder dass das Gerät ein bewegliches medizintechnisches Gerät ist.

9. Vorrichtung nach mindestens einem der vorangehenden Ansprüche, **dadurch gekennzeichnet, dass** die Sicherheitssensorik in eine oder mehrere Kacheln (62) integriert ist oder auf der Oberfläche von einer oder mehreren Kacheln (62) angebracht ist, wobei die Kacheln (62) zum Anbringen auf einer Oberfläche des Gerätes oder zum Integrieren in eine Oberfläche des Gerätes ausgebildet sind.

10. Kachel zum Anbringen auf einer Oberfläche oder Integrieren in eine Oberfläche eines maschinell oder automatisch gesteuerten beweglichen Gerätes, insbesondere eines Handhabungsgerätes wie eines Roboters (5) oder eines AGV (60), wobei die Kachel (62) eine Sicherheitssensorik mit einer taktilen Sensorik mit mindestens einem ersten Sensor (22, 41, 30, 31, 32, 33) und einer Annäherungssensorik mit mindestens einem zweiten Sensor (23, 48, 35, 36) umfasst, wobei der erste Sensor (22, 41, 30, 31, 32, 33) und der zweite Sensor (23, 48, 35, 36) jeweils auf einem optischen Messprinzip basiert und/oder die Sicherheitssensorik redundant ausgelegt ist und **dadurch gekennzeichnet, dass** die Annäherungssensoren eine Mehrzahl von Time-of-Flight Sensoren und eine Mehrzahl von Proximity-Sensoren umfassen.

11. Kachel nach Anspruch 10, wobei die Kachel (62) einen insbesondere mit Sensorschaum (24) abgedeckten rahmenförmigen Randbereich aufweist, wobei der rahmenförmige Randbereich eine taktile Sensorik mit einer Mehrzahl von taktilen Sensoren aufweist, und wobei die Kachel (62) einen insbesondere nicht mit Sensorschaum (24) abgedeckten zentralen Bereich aufweist, in dem eine Annäherungssensorik mit einer Mehrzahl von Annäherungssensoren vorgesehen ist.

12. Kachel nach Anspruch 10 oder 11, wobei auf der Kachel (62) mindestens zwei Controller, insbesondere Mikrocontroller, vorgesehen sind, die derart verschaltet sind, dass sie sich sowohl gegenseitig hinsichtlich ihrer Funktion überwachen als auch jeweils alle Sensoren, die sich auf der Sensorkachel (62) befinden, hinsichtlich ihrer Funktion überwachen.

13. Kachel nach mindestens einem der Ansprüche 10 bis 12, wobei sich auf der Kachel (62) mindestens drei, auf verschiedenen Messprinzipien oder Funktionsweisen beruhende Sensoren vorgesehen sind, um so eine diversitäre Auslegung zu gewährleisten.

14. Sensornetz mit einer Mehrzahl miteinander verbundener oder verschalteter Kacheln (62) nach mindestens einem der Ansprüche 10 bis 13.

15. Maschinell oder automatisch gesteuertes bewegliches Gerät, insbesondere Handhabungsgerät oder Roboter (5), wobei auf einer Oberfläche des Gerätes eine Mehrzahl von Kacheln nach mindestens einem der Ansprüche 10 bis 13 vorgesehen sind oder auf der Oberfläche des Gerätes ein Sensornetz nach Anspruch 14 vorgesehen ist.

16. Verfahren zur Sicherung eines maschinell oder automatisch gesteuerten beweglichen Gerätes, insbesondere eines Handhabungsgerätes wie eines Roboters (5) oder eines AGV (60), wobei das Gerät auf seiner Oberfläche angeordnet oder in seiner Oberfläche integriert zumindest bereichsweise eine oder mehrere Kacheln nach mindestens einem der Ansprüche 10 bis 13 oder ein Sensornetz nach Anspruch 14 aufweist, wobei von den Sensoren bereitgestellte Daten einer speicherprogrammierbaren Steuerung (SPS) zugeführt werden, die aus den Daten Bahndaten eines sich an das Gerät annähernden Objektes berechnet oder abschätzt.

17. Verfahren nach Anspruch 16, wobei das Ergebnis der Berechnung oder Abschätzung der Bahndaten verwendet wird, um bei Kollisionsgefahr von Gerät und Objekt eine Selbsthemmung des Gerätes zu bewirken.

## Claims

1. A fixture for securing a machine- or automatically controlled movable device, in particular a handling device such as a robot (5) or an AGV (60), with a safety sensor system for detection of objects in a work space of, at a distance from, or in an environment around the device and with a safety controller configured to interact with a device controller of the device while controlling safety-relevant device functions dependent on signals from the safety sensor system, wherein the safety sensor system comprises a tactile sensor system with at least one first sensor (22, 41, 30, 31, 32, 33) and an approximation sensor system with at least one second sensor (23, 48, 35, 36), **characterised in that** wherein the first sensor (22, 41, 30, 31, 32, 33) and the second sensor (23, 48, 35, 36) each being based on an optical measuring principle and/or the safety sensor system being redundantly designed and **characterised in that** the tactile sensor system comprising one or several optical scattered light sensors.

2. The fixture in accordance with claim 1, **characterised in** the safety sensor system being a two-level collision sensor system, wherein the approximation sensor system is configured to switch the device into a safety-limited-speed (SLS) status in accordance with EN 61800 at approximation of an object or a person (10) to the device or a part of the device, and wherein the tactile sensor system is configured to switch the device into a safe-operating-stop (SOS) in accordance with EN 61800 at contact of the device or a part thereof with an object or a person (10).

3. The fixture in accordance with claim 1 or 2, **characterised in** the tactile sensor system having means (24), in particular a corresponding sensor skin or surface design, that are configured to deflect or compensate any lag of the device in stopping of a movement of the device or a part thereof.

4. The fixture in accordance with at least one of the preceding claims, **characterised in** the safety sensor system being designed intrinsically safe and redundant.

5. The fixture in accordance with at least one of the preceding claims, **characterised in** the first sensor or sensors (22, 41, 30, 31, 32, 33) being optical distance sensors and the second sensor or sensors (23, 48, 35, 36) being optical-tactile sensors.

6. The fixture in accordance with at least one of the preceding claims, **characterised in** the approximation sensor system resolution and/or recorded distance area being designed with diversity so that different measured values are delivered respectively for a respective same distance.

7. The fixture in accordance with at least one of the preceding claims, **characterised in** the tactile sensor system having a foam (24) or being connected to a foam (24) or being integrated into a foam (24).

8. The fixture in accordance with at least one of the preceding claims, **characterised in** the device being a robot (5), in particular an industrial robot or household robot, the device being an automatically controlled vehicle or an AGV (60), the device being a forklift truck (70), in particular a machine- or automatically controlled forklift truck, the device being a machine- or automatically controlled device for use in a hospital or for the domestic care area, or the device being a movable medicine-technical device.

9. The fixture in accordance with at least one of the preceding claims, **characterised in** the safety sensor system being integrated into one or several tiles (62) or mounted on the surface of one or several tiles (62), wherein the tiles (62) are formed for attachment on a surface of the device or for integration into a surface of the device.

10. A tile to be attached on a surface or integrated into a surface of a machine- or automatically controlled movable device, in particular a handling device such as a robot (5) or an AGV (60), wherein the tile (62) comprises a safety sensor system with a tactile sensor system with at least one first sensor (22, 41, 30, 31, 32, 33) and an approximation sensor system with at least one second sensor (23, 48, 35, 36), wherein the first sensor (22, 41, 30, 31, 32, 33) and the second sensor (23, 48, 35, 36) are each based on an optical measuring principle and/or the safety sensor system is designed redundantly and **characterised in that** the approximation sensors comprise a plurality of time-of-flight sensors and a plurality of proximity sensors.

11. The tile in accordance with claim 10, wherein the tile (62) has a frame-shaped edge area, in particular covered with sensor foam (24), wherein the frame-shaped edge area has a tactile sensor system with a plurality of tactile sensors, and wherein the tile (62) has a central area in particular not covered with sensor foam (24), wherein an approximation sensor system with a plurality of approximation sensors is provided.

12. The tile in accordance with claim 10 or 11, wherein at least two controllers, in particular microcontrollers, are provided on the tile (62), which are interconnected to monitor both each other's function and the function of all sensors that are located on the sensor tile (62) respectively.

13. The tile in accordance with at least one of claims 10 to 12, wherein at least three sensors based on different measuring principles or functions are provided on the tile (62) in order to ensure a design with diversity.

14. Sensor network with a plurality of linked or interconnected tiles (62) in accordance with at least one of claims 10 to 13.

15. Machine- or automatically controlled movable device, in particular handling device or robot (5), wherein a plurality of tiles in accordance with at least one of claims 10 to 13 is provided on the surface of the device or a sensor network in accordance with claim 14 is provided on the surface of the device.

16. Procedure to secure a machine- or automatically controlled movable device, in particular a handling device such as a robot (5) or an AGV (60), wherein the device comprises one or several tiles in accordance with at least one of claims 10 to 13 or a sensor network in accordance with claim 14 arranged on its surface or integrated into its surface, wherein data provided by the sensors are supplied to a programmable logic controller (PLC) that calculates or estimates path data for an object approaching the device from the data.

17. Procedure in accordance with claim 16, wherein the result of the calculation or estimate of the path data is used in order to cause self-inhibition of the device if there is any risk of collision between the device and the object.

## Revendications

1. Dispositif destiné à la sécurisation d'un appareil mobile à commande mécanique ou automatique, notamment un appareil de manipulation tel qu'un robot (5) ou un AGV (60), doté d'un système de capteurs de sécurité pour détecter des objets dans un espace de travail, une distance ou un environnement de l'appareil et avec une commande de sécurité, qui est configurée de manière à coopérer avec une commande de l'appareil et à commander ainsi des fonctions de l'appareil liées à la sécurité en fonction de signaux du système de capteurs de sécurité, le système de capteurs de sécurité contenant un système capteur tactile comprenant au moins un premier capteur (22, 41, 30, 31, 32, 33) et un système capteur de proximité comprenant au moins un deuxième capteur (23, 48, 35, 36), **caractérisé en ce que** le premier capteur (22, 41, 30, 31, 32, 33) et le deuxième capteur (23, 48, 35, 36) étant respectivement basés sur un principe de mesure optique et/ou **en ce que** le système de capteurs de sécurité étant conçu de manière redondante et **caractérisé en ce que** le système capteur tactile comporte un ou plusieurs capteurs optiques de lumière diffuse.

2. Dispositif selon la revendication 1, **caractérisé en ce que** le système de capteurs de sécurité est un système capteur de collision à deux niveaux, le système capteur de proximité étant configuré de manière à basculer l'appareil dans un état « Safety Limited Speed » (SLS) selon EN 61800 en cas d'approche d'un objet ou d'une personne (10) de l'appareil ou d'une partie de l'appareil, et le système capteur de proximité étant configuré de manière à basculer l'appareil dans un état « Safe Operating Stop » (SOS) selon EN 61800 en cas de contact de l'appareil ou d'une partie de l'appareil avec un objet ou une personne (10).

3. Dispositif selon la revendication 1 ou 2, **caractérisé en ce que** le système capteur tactile comporte des moyens (24), notamment une membrane de détection ou un aménagement superficiel correspondant, qui sont configurés pour amortir ou compenser une éventuelle course résiduelle de l'appareil en cas d'un arrêt d'un mouvement de l'appareil ou d'une partie de celui-ci.

4. Dispositif selon au moins l'une des revendications précédentes, **caractérisé en ce que** le système de capteurs de sécurité est conçu avec une sécurité intrinsèque et de manière redondante.

5. Dispositif selon au moins l'une des revendications précédentes, **caractérisé en ce que** le ou les premiers capteurs (22, 41, 30, 31, 32, 33) sont des capteurs de distance optiques et **en ce que** le ou les deuxièmes capteurs (23, 48, 35, 36) sont des capteurs tactiles optiques.

6. Dispositif selon au moins l'une des revendications précédentes, **caractérisé en ce que** le système capteur de proximité est conçu avec une résolution et/ou une plage de distance détectée diversifiées, de sorte à fournir respectivement plusieurs valeurs mesurées différentes pour une même distance.

7. Dispositif selon au moins l'une des revendications précédentes, **caractérisé en ce que** les systèmes capteur tactile comprennent une mousse (24) ou sont reliés à une mousse (24) ou intégrés à une mousse (24).

8. Dispositif selon au moins l'une des revendications précédentes, **caractérisé en ce que** l'appareil est un robot (5), notamment un robot industriel ou un robot domestique, **en ce que** l'appareil est un véhicule à commande automatique ou un AGV (60), **en ce que** l'appareil est un chariot élévateur (70), en particulier un chariot élévateur à commande mécanique ou automatique, **en ce que** l'appareil est un appareil à commande mécanique ou automatique destiné à être utilisé dans un hôpital ou pour les soins à domicile, ou **en ce que** l'appareil est un appareil médico-technique mobile.

9. Dispositif selon au moins l'une des revendications précédentes, **caractérisé en ce que** le système de capteurs de sécurité est intégré à un ou plusieurs carreaux (62) ou est appliqué sur la surface d'un ou plusieurs carreaux (62), les carreaux (62) étant destinés à être appliqués sur une surface de l'appareil ou à être intégrés à une surface de l'appareil.

10. Carreau destiné à être appliqué sur une surface ou à être intégré à une surface d'un appareil mobile à commande mécanique ou automatique, notamment d'un appareil de manipulation tel qu'un robot (5) ou un AGV (60), le carreau (62) comprenant un système de capteurs de sécurité avec un système capteur tactile avec au moins un premier capteur (22, 41, 30, 31, 32, 33) et un système capteur de proximité avec au moins un deuxième capteur (23, 48, 35, 36), le premier capteur (22, 41, 30, 31, 32, 33) et le deuxième capteur (23, 48, 35, 36) étant respectivement basés sur un principe de mesure optique et/ou le système de capteurs de sécurité étant conçu de manière redondante et **caractérisé en ce que** les capteurs de proximité comprennent une pluralité de capteurs de temps de vol et une pluralité de capteurs de proximité.

11. Carreau selon la revendication 10, le carreau (62) comportant une zone de bordure en forme de cadre recouverte notamment de mousse de détection (24), la zone de bordure en forme de cadre comportant un système capteur tactile avec une pluralité de capteurs tactiles, et le carreau (62) comportant une zone centrale non recouverte, notamment de mousse de détection (24), dans laquelle est prévu un système capteur de proximité avec une pluralité de capteurs de proximité.

12. Carreau selon la revendication 10 ou 11, deux contrôleurs, notamment des microcontrôleurs, étant au moins prévus sur le carreau (62), et connectés de sorte à se surveiller mutuellement en ce qui concerne leur fonctionnement et à surveiller respectivement également tous les capteurs qui se trouvent sur le carreau de détection (62) en ce qui concerne leur fonctionnement.

13. Carreau selon au moins l'une des revendications 10 à 12, trois capteurs reposant sur des principes de mesure ou des modes de fonctionnement différents étant au moins prévus sur le carreau (62) afin de garantir ainsi une conception diversifiée.

14. Réseau de capteurs comprenant une pluralité de carreaux (62) reliés ou interconnectés entre eux selon au moins l'une des revendications 10 à 13.

15. Appareil mobile à commande mécanique ou automatique, notamment appareil de manipulation ou robot (5), une pluralité de carreaux selon au moins l'une des revendications 10 à 13 étant prévue sur une surface de l'appareil, ou un réseau de capteurs selon la revendication 14 étant prévu sur la surface de l'appareil.

16. Procédé destiné à la sécurisation d'un appareil mobile à commande mécanique ou automatique, notamment d'un appareil de manipulation tel qu'un robot (5) ou un AGV (60), l'appareil comportant un ou plusieurs carreaux selon au moins l'une des revendications 10 à 13 ou un réseau de capteurs selon la revendication 14, disposés sur sa surface ou intégrés à sa surface, au moins pour certaines zones, les données fournies par les capteurs étant affectées à un automate programmable industriel (API) qui, à partir des données, calcule ou estime des données de trajectoire d'un objet s'approchant de l'appareil.

17. Procédé selon la revendication 16, le résultat du calcul ou de l'estimation des données de trajectoire étant employé pour provoquer un blocage automatique de l'appareil en cas de risque de collision entre l'appareil et l'objet.
